Europäisches Patentamt

European Patent Office

Office européen des brevets

(11) Publication number: **0 268 802 B1**

# EUROPEAN PATENT SPECIFICATION

(45) Date of publication of patent specification: **03.04.91**  (51) Int. Cl.⁵: **A47B  21/00**

(21) Application number: **87114951.4**

(22) Date of filing: **13.10.87**

(54) Support arm for computer keyboard.

(30) Priority: **17.10.86 US 920050**

(43) Date of publication of application:
**01.06.88 Bulletin  88/22**

(45) Publication of the grant of the patent:
**03.04.91 Bulletin  91/14**

(84) Designated Contracting States:
**BE DE FR GB**

(56) References cited:
| | |
|---|---|
| **EP-A- 0 125 669** | **EP-A- 0 168 158** |
| **DE-B- 2 717 289** | **DE-U- 8 507 138** |
| **US-A- 4 511 276** | **US-A- 4 605 334** |

(73) Proprietor: **WANG LABORATORIES INC.**
**One Industrial Avenue**
**Lowell, MA 01851(US)**

(72) Inventor: **Kuba, Lawrence M.**
**16 Sagamore Road**
**Nashua New Hampshire 03062(US)**
Inventor: **Privitera, David J.**
**42 Jewett Street**
**Georgetown, MA 01833(US)**

(74) Representative: **Behrens, Dieter, Dr.-Ing. et al**
**Wuesthoff & Wuesthoff Patent- und Recht-**
**sanwälte Schweigerstrasse 2**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a support arm for computer keyboards. Computer keyboards have become commonplace in the office environment. They are typically detached from the computer monitor and processing unit, and placed on top of the user's desk. In that location they permanently occupy valuable desk space, are at an ergonomically less desirable height, and typically lack any tilt adjustment. Some efforts have been made to improve the ergonomic positioning of the keyboard; e.g., special shelves have been built into computer work stations to lower the keyboard to a height below that of the customary desk surface.

Other attempts (EP-A-0 125 669 A3 the source of the preamble of Claim 1) comprise a universal keyboard mount with a keyboard mounting plate, a carrier adjustable about a horizontal axis positioned and a rear housing that is pivotally about a rear vertical axis and supports one end of a parallel link mechanism. This mechanism permits upward and downward movement of the keyboard mounting plate without change of the tilt of that plate. A slide plate mechanism provides forward and backward movement of the keyboard mounting plate towards and away from the operator. This adjustable keyboard mount may be stored under a work surface (desk top) and moved from beneath that working poisition at any convenient orientation of the keyboard. However, if the mount is pivoted about the rear vertical axis the keyboard mounting plate rotates as well and looses its normally parallel orientation with respect to the front edge of the desk plate. The operator may thus not adjust the keyboard laterally to his position without sacrificing the proper position with regard to himself.

A table separate form any desk i.a. for supporting keyboards was proposed (EP-A-0 168 158 A3) which supports a keyboard support plate circularey pivotably about a vertical axis on a horizontally radially extending arm. About this arm the support plate is adjacent its front end tiltable about a horizontal axis. No further adjustements are provided for.

We have discovered that a computer keyboard can be supported not only at an ergonomically correct height during use and stored out of the way beneath an ordinary desk when not in use by supporting the keyboard on an arm that horizontally pivots about a base clamped to the edge of the desk, but also such that it can be adjusted with regard to the operator at any desired position and orientation.

It is therefore an object of the invention as defined in the appended imdependent Claim 1 to provide a support arm for a computer keyboard with improved adjustability. Preferred embodiments of the invention are defined in Claims 2-8.

A joint with two degrees of feedom (rotation about vertical and horizontal axes) is provided at the keyboard end of the arm, to provide further ergonomic adjustment of the arm with regard to the position of the operator.

The invention frees desktop space for more productive use and improves the appearance of the desk by allowing the keyboard to be stored out of sight. Supported on the arm, the keyboard moves easily and quickly from the stored position beneath the desk to the operating position, and vice versa. A wide range of adjustment is provided in the operating position; the keyboard can be tilted to the most comfortable position, and it can be rotated about the free end of the arm to achieve nearly any relative orientation with the desk. The arm provides a rigid platform for the keyboard even though supported from the desk at only a single location the rigidity is provided without the complexity of a special shelf or special computer workstation furniture. The arm can be attached rapidly without special tools to nearly all desks and tables, and it can easily be removed or moved to another location.

Fig. 1 is a perspective view of a desk with the keyboard arm of the invention attached, showing the keyboard in one possible operating position.

Fig. 2 is a perspective view of the same desk with the keyboard in the stored position.

Fig. 3 is a plan view of the arm with the keyboard shown in dashed lines, and with a portion of the keyboard support plate broken away.

Fig. 4 is an elevation view of the arm with the keyboard and work surface shown in dashed lines, and with a portion of the arm shown in cross section.

Fig. 5 is a cross-sectional view taken at 5-5 in Fig. 4, showing the pivoting base of the arm (the draft of the various die cast members has been omitted for simplicity).

Fig. 6 is a cross-sectional view taken at 6-6 in Fig. 4, showing the keyboard-supporting joint at the free end of the arm.

Figs. 7 and 8 are diagrammatic views showing various possible positions of the arm and keyboard.

Fig. 9 is a perspective view of the arm.

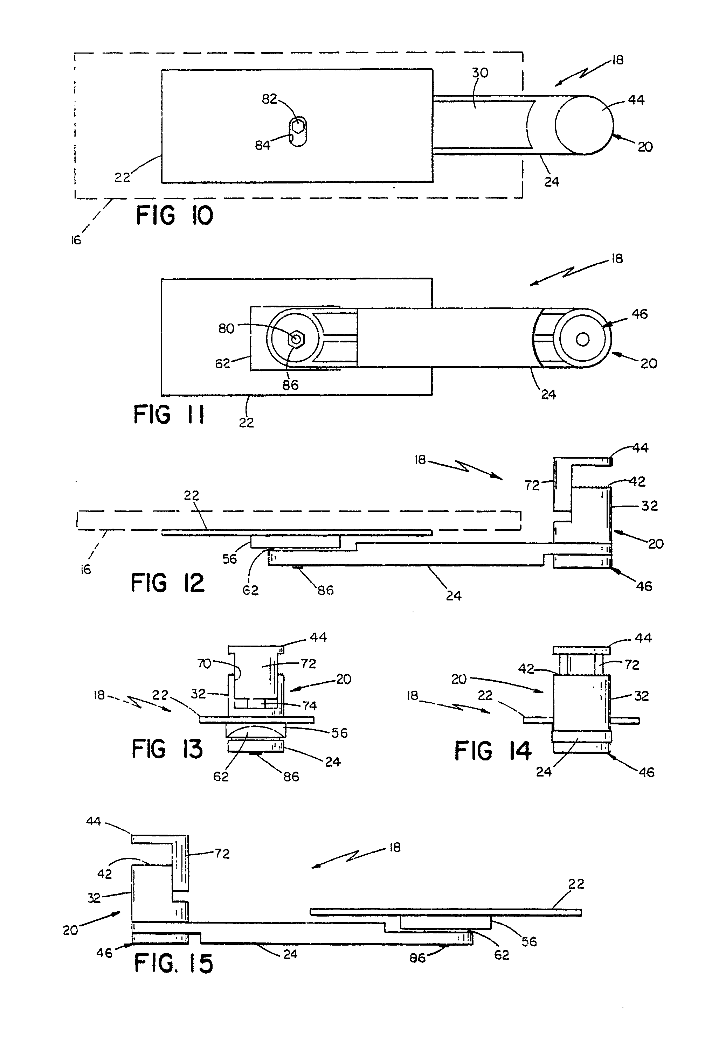

Figs. 10 and 11 are plan views of the arm.

Figs. 12-15 are elevation views of the arm.

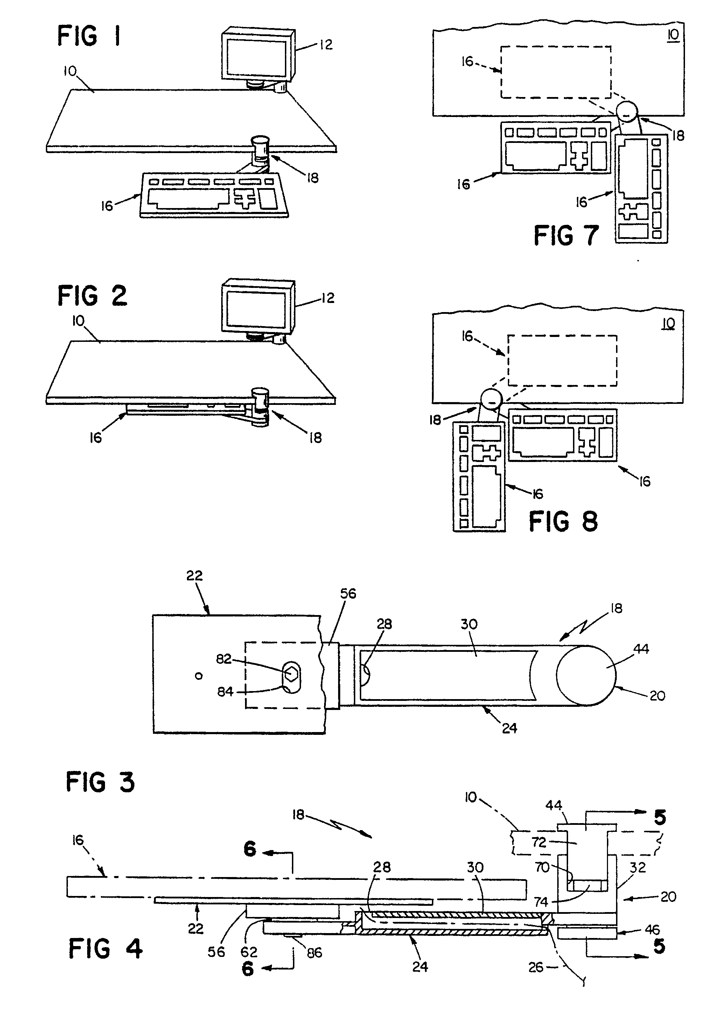

Turning to Figs. 1 and 2, there is shown a desk 10 to which are attached a computer video monitor 12 supported on arm 14 and a keyboard 16 supported on arm assembly 18. The keyboard can be moved from an operating position (Fig. 1) to a stored position beneath the desk (Fig. 2).

Turning to Figs. 3 and 4, the keyboard arm assembly 18 comprises base 20, which is clamped to the edge of the desk 10, horizontal arm 24 (die cast aluminum) rotatably supported from the base, and keyboard support plate 22 rotatably supported on the free end of the arm. Arm 24 has a hollow core through which the keyboard cable 26 is passed. The cable enters the arm through opening 28 in access panel 30, a polycarbonate sheet held in place by lugs gripping the interior walls of the arm's hollow core. The cable exits through an opening at the base end of the hollow core. Passing the cable through the arm minimizes movement of the cable during keyboard movements.

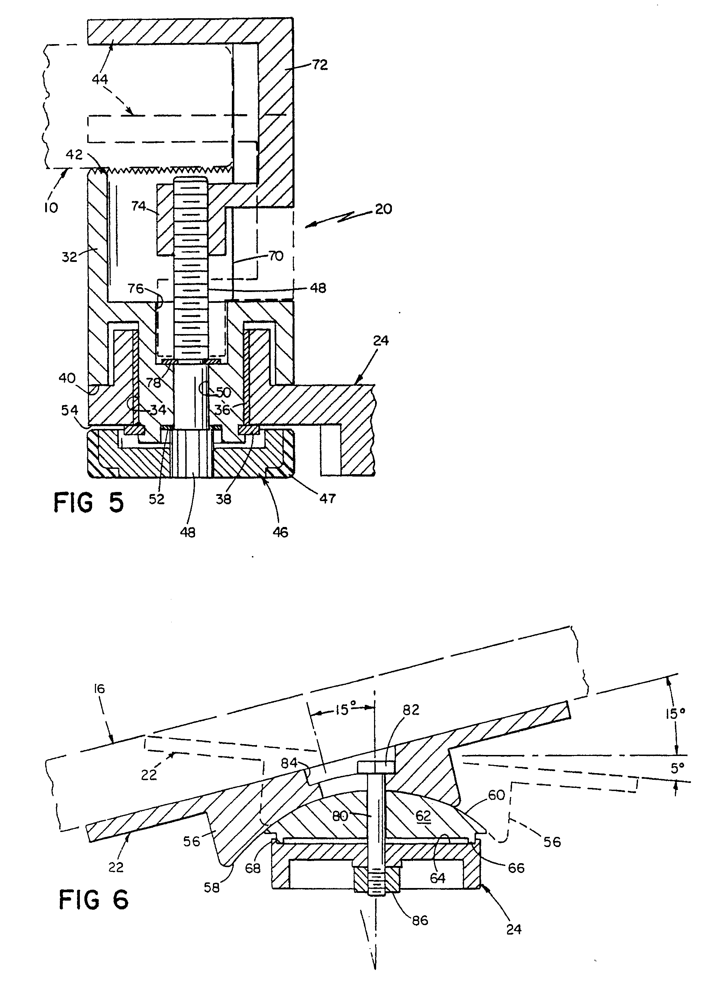

The pivoting base 20, shown in cross section in Fig. 5, comprises a central member 32 (die case aluminum) to which arm 24 is rotatably connected at journal 34, which has bushing 36 (660 bronze, not oiled). Retention ring 38 secures arm 24 to the central member 32.

To achieve a rigid support for the keyboard, virtually all perceivable play in arm 24 is eliminated. This is accomplished by providing a substantial height (31 mm/1.25 inches) to journal 34, and by providing close tolerances between the retention ring 38 and lower surface 40 of the central member, to prevent vertical movement of the arm.

Base 20 is attached to desk 10 by clamping the edge of the desk between adjustable clamping member 44 (die case aluminum) and the upper, knurled surface 42 of the central member. The clamping member 44 is adjusted by turning knob 46, which in turn rotates threaded rod 48 (steel), to which the clamping member is threaded. The desk-contact surface of clamping member 44 is provided with a rubber or cork pad (not shown) to prevent damages to the desk. The rod is press fitted into knob 46 (die case aluminum), and passes through bore 50 in central member 32. Knob 46 has rubber grip 47 at its periphery. Central member 32 has a cutout 70 sized to receive the vertical, cylindrical wall 72 of clamping member 44. Base portion 74 of the clamping member, through which rod 48 is threaded, is received by recess 76 in the central member. Retaining ring 78 prevents the whole assembly of rod 48, clamping member 44, and knob 46 from shifting vertically within the central member when the base is not installed on a desk. The shapes of clamping member 44 and central member 32 and length of rod 48 allow adjustment of the clamping member to accommodate desk thicknesses ranging from about 1.9 to 5.1 cm.

Thrust washer 52 bears the upward thrust load of threaded rod 48 and knob 46 on the central member when the base is tightly clamped to the desk. No restraint on the freedom of rotation of arm 24 results from the clamping procedure, because knob 46 is prevented from coming into contact with the arm, by thrust washer 52 and the provision of adequate clearance 54 between the two parts. Arm 24 is free to pivot a full 360 degrees about a vertical axis of rotation.

The rotatable joint at the keyboard end of the arm assembly is shown in cross section in Fig. 6. Keyboard support plate 22 (molded structural foam) has base 56 with cylindrical surface 58, which mates with matching cylindrical surface 60 on intermediate member 62 (injection molded acetal), which rotates, in turn, on bearing surface 64 at the end of arm 24. Member 62 has a horizontal bearing surface provided by narrow annular projection 66, which contacts horizontal bearing surface 64 on the arm just inside annular lip 68. Bolt 80 clamps the three members (base 56, intermediate member 62, and arm 24) together. The head 82 of the bolt travels in slot 84 in keyboard support plate 22 (Figs. 3 and 6). The slot prescribes the extent to which the keyboard can be tilted.

The keyboard can be quickly tilted or rotated into a new position, and retain that position without further adjustment. This is accomplished by using dissimilar plastics for base 56 and member 62, one material being hard, and the other slippery. The members making up the joint are tightened by nut 86 (with self-locking insert) and bolt 80 just tightly enough to assure that there is enough friction between base 56, intermediate member 62, and bearing surface 64 to keep the keyboard in its selected orientation. The nut is not adjusted so tightly, however, as to prevent adjustment of the relative positions of these members. The keyboard can be tilted about a horizontal axis of rotation from 15 degrees forward to 5 degrees backward, and it can be rotated about a vertical axis of rotation a full 360 degrees.

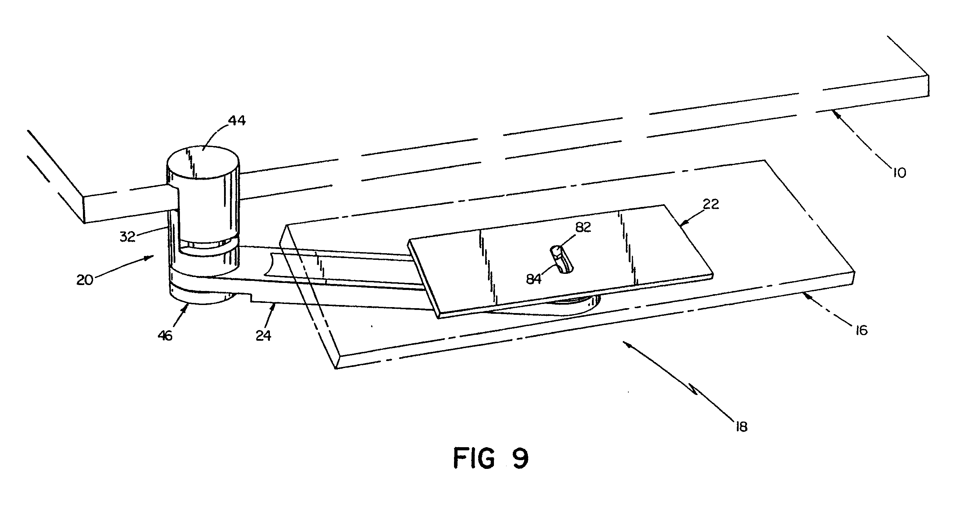

Turning to Figs. 7 and 8, it can be seen that the ability of the keyboard to be rotated a full 360 degrees with respect to arm 24, an the arm, in turn, to be rotated a full 360 degrees with respect to the base, is what permits the keyboard to be positioned at any chosen angular orientation with respect to the desk, no matter whether installed at the left or right of the user.

Though not shown in the figures, it is also possible to install the base near the edge of a desk so that the arm can be swung a full 180 degrees to allow the keyboard to be shared by a neighbor, who could also move the video monitor arm so that the monitor, too, could be shared.

Operation of the arm assembly is quite simple. The arm assembly is installed on a desk by turning knob 46 to open the clamp to the desk thickness, pushing the clamp over the edge of the desk, and tightening knob 46 until the clamp is secured to the desk. The keyboard is then installed on the support plate 22 by screws passing through holes (not shown) in the support plate. An adhesively-secured adaptor plate could be used to install keyboards not having attachment screws in the proper locations.

When the keyboard is not in use it is tucked under the desk surface, out of sight. There is ordinarily more than adequate vertical space for the arm and keyboard to reside under the desk without interfering with the legs of the user. To use the keyboard, the user simply reaches under his desk and pulls the keyboard out to the desired operating position. No further adjustments are needed.

Other embodiments of the invention are within the following claims. For example, an optional surface for resting the user's palms in front of the keyboard can be provided by sandwiching a palm-rest plate between the keyboard and support plate 22, with the palm-rest plate extending outward in front of the keyboard. Also, protruding pins could be substituted for the knurled desk-gripping surface of the clamp, to provide a more secure grip to the underside of the desk.

**Claims**

1. A support arm for installing a computer keyboard (16) on an ordinary desk (10) or table, comprising
   a base (20) for detachably securing the support arm (18) to the ordinary desk,
   the base (20) having a means (44) for mounting the base to the edge of the desk,
   an arm member (24) extending horizontally from the base at a height below the level of the underside of the plate of the desk,
   a keyboard support plate (22) at the keyboard end of the arm member (24),
   a first rotatable joint (34) at the base with means for permitting rotation of the arm member (24) about a first vertical axis, and means for tilting the keyboard support plate (22)
   characterized in
   that a second rotatable joint (56, 60) at the keyboard end of the arm member (24) with means for permitting rotation of the keyboard (16) about a second vertical axis is provided
   that the first rotatable joint (34) permits rotating sufficient to move the arm member (24) from a keyboard stored position in which the keyboard is positioned beneath the desk to an operating position in which the keyboard is exposed in front of the desk, and in that the second rotatable joint comprises
   a member (56) fixed to the underside of the keyboard support plate (22) and has a first cylindrical surface (58),
   an intermediate member (62) having a second cylindrical surface (60) adapted to mate with the first cylindrical surface (58), the two cylindrical surfaces being adapted to provide a tilting rotation of the keyboard, and
the cylindrical surfaces (58, 60) are on members constructed of sufficiently different plastic material that the keyboard (16) can be tilted to a desired position and retain that position without further tightening or other adjustment of the joint, a first horizontal bearing surface (66) on the intermediate member (62) and adpated to mate with the second horizontal bearing surface (64),
the two bearing surfaces being adapted to provide the rotation about the second vertical axis, and
means (80) (e.g., a bolt passing through the members) for clamping together the cylindrical and horizontal surfaces.

2. The support arm of claim 1 wherein the second rotatable joint (56, 60) includes means for rotating the keyboard support plate (22) about a horizontal axis of rotation to permit tilting the keyboard to a desired position.

3. The support arm of claim 1 wherein the base (20) further comprises
   an upper clamping member (44) with a surface for gripping the upper surface of the desk plate,
   a thread rod (48) to which the upper member is threaded, the threaded rod extending vertically through the central member, an adjustment knob (46) connected to the threaded rod (48) and providing a means for tightening or loosening the grip of the clamping and central members on the desk plate.

4. The support arm of claim 3 wherein means (52, 54) are provided for supporting the support arm (18) with respect to the other members of the base (20) so that the support arm (18) is free to rotate about the first vertical axis even when the base (20) is tightly clamped to the desk plate.

5. The support arm of claim 4 wherein the threaded rod (48) and the first vertical axis are coaxial.

6. The support arm of claim 4 wherein the support arm (18) and the central member (32) have mating cylindrical journals (50, 54), the adjustment knob (46) is positioned beneath the arm (18), and the threaded rod (48) extends through the interior of the journal (50) of the central member (32).

7. The support arm of claim 6 wherein the central member (32) and support arm (18) are shaped to conceal the journal (50) and threaded rod (48).

8. The support arm of claim 1 further comprising means (28) in the arm member (24) for running the cable (26) of the keyboard (16) through the arm member (24) concealed from view.

**Revendications**

1. Bras de support destiné à installer un clavier d'ordinateur (16) sur un bureau ordinaire (10) ou sur une table, comportant
une base (20) destinée à attacher le bras de support (18) de manière amovible au bureau ordinaire,
ladite base (20) étant munie d'un moyen (44) pour le montage de la base sur le bord du bureau,
un bras (24), s'étendant en direction horizontale à partir de la base, à un niveau en-dessous du niveau de la surface inférieure du dessus du bureau,
une tablette d'appui du clavier (22) au bout côté clavier du bras (24),
une première articulation tournante (34) à la base, ayant des moyens pour permettre une rotation du bras (24) autour d'un premier axe vertical, et des moyens pour basculer la tablette d'appui du clavier (22),
caractérisé en ce que
l'on a prévu une seconde articulation tournante (56, 60) au bout côté clavier du bras (24), ayant des moyens pour permettre une rotation du clavier (16) autour d'un second axe vertical,
que la première articulation tournante (34) permet une rotation suffisante du bras (24) pour le mouvoir à partir d'une position de repos du clavier dans laquelle le clavier est placé en-dessous du bureau, vers une position de travail dans laquelle le clavier est exposé en face du bureau,
et que la seconde articulation tournante comprend une pièce (56) qui est attachée à la surface inférieure de la tablette d'appui du clavier (22) et présente une première surface cylindrique (58),
une pièce intermédiaire (62) qui est munie d'une seconde surface cylindrique (60) capable de s'apparier à la première surface cylindrique (58),
les deux surfaces cylindriques étant capables de permettre une rotation basculante du clavier, et
les surfaces cylindriques (58, 60) se trouvent sur des éléments faits de matières plastiques suffisamment différentes pour que le clavier (16) puisse être basculé dans une position désirée et s'y tenir dans cette position sans un serrage supplémentaire ou un autre réglage de l'articulation tournante,
une première surface d'appui horizontale (66) sur la pièce intermédiaire (62) qui est apte à s'apparier à une seconde surface d'appui horizontale (64),
les deux surfaces d'appui étant capables de permettre la rotation autour du second axe vertical, et
des moyens (80) (tel qu'un boulon traversant les pièces) pour presser les surfaces cylindriques et horizontales les unes contre les autres.

2. Bras de support selon la revendication I, dans lequel la seconde articulation tournante (56, 60) comprend des moyens destinés à tourner la tablette d'appui du clavier (22) autour d'un axe de rotation horizontale afin de permettre le basculement du clavier dans une position désirée.

3. Bras de support selon la revendication 1, dans lequel la base (20) comporte en outre
une mâchoire supérieure (44) présentant une surface destinée à se serrer contre la surface supérieure du dessus du bureau, une barre filetée (48) sur laquelle est vissée la mâchoire supérieure, ladite barre filetée traversant dans une direction verticale la pièce centrale,
un bouton de réglage (46), relié à la barre filetée (48) et servant à serrer ou à desserrer la mâchoire et la pièce centrale par rapport au dessus du bureau.

4. Bras de support selon la revendication 3, dans lequel l'on a prévu des moyens (52, 54) destinés à supporter le bras de support (18) par rapport aux autres éléments de la base (20), de façon que le bras de support (18) peut être librement tourner autour du premier axe vertical même dans le cas où la base (20) est fermement serrée contre le dessus du bureau.

5. Bras de support selon la revendication 4, dans lequel la barre filetée (48) et le premier axe vertical sont coaxiaux.

6. Bras de support selon la revendication 4, dans lequel le bras de support (18) et la pièce centrale (32) ont des tourillons cylindriques pouvant s'apparier, le bouton de réglage (46) est positionné en-dessous du bras (18), et la barre filetée (48) traverse l'espace intérieur du tourillon (50) de la pièce centrale (32).

7. Bras de support selon la revendication 6, dans lequel la pièce centrale (32) et le bras de support (18) ont une forme permettant de cacher le tourillon (50) et la barre filetée (48).

8. Bras de support selon la revendication 1, comprenant, en outre, des moyens (28) dans l'élément de bras (24) destinés à la pose du câble (26) du clavier (16) à travers l'élément de bras (24) de manière à le dérober à la vue.

## Ansprüche

1. Tragarm zum Anbauen einer Computertastatur (16) an einen gewöhnlichen Schreibtisch oder an einen Tisch, mit
einer Basis (20) zum lösbaren Anbringen des Tragarms (18) am gewöhnlichen Schreibtisch, wobei die Basis (20) eine Einrichtung (44) zum Anbringen der Basis am Rand des Schreibtischs aufweist,
einem Armteil (24), das sich von der Basis weg waagerecht auf einer Höhe unterhalb der Höhe der Unterseite der Schreibtischplatte erstreckt,
einer Tastaturtragplatte (22) am tastaturseitigen Ende des Armteils (24),
einer ersten Drehverbindung (34) an der Basis mit Mitteln zum Drehen des Armteils (24) um eine erste senkrechte Achse und Mitteln zum Kippen der Tastaturtragplatte (22),
dadurch gekennzeichnet, daß
eine zweite Drehverbindung (56, 60) am tastaturseitigen Ende des Armteils (24) mit Mitteln zum Drehen der Tastatur (16) um eine zweite senkrechte Achse vorgesehen ist,
die erste Drehverbindung (34) eine Drehung des Armteils (24) ermöglicht, die ausreicht, um das Armteil (24) aus einer Tastatur-Ruhestellung, in welcher die Tastatur unterhalb des Schreibtischs angeordnet ist, in eine Arbeitsstellung zu bewegen, in welcher die Tastatur vor dem Schreibtisch freiliegt, und daß die zweite Drehverbindung umfaßt:
ein an der Unterseite der Tastaturtragplatte (22) befestigtes Bauteil (56) mit einer ersten zylindrischen Fläche (58),
ein Zwischenstück (62) mit einer zweiten zylindrischen Fläche (60), die mit der ersten zylindrischen Fläche (58) zusammenpaßbar ist,
wobei die beiden zylindrischen Flächen eine Kippdrehung der Tastatur ermöglichen, und die zylindrischen Flächen (58, 60) an Bauteilen aus Kunststoffen ausgebildet sind, die ausreichend verschieden sind, damit die Tastatur (16) in eine gewünschte Stellung gekippt werden kann und diese Stellung ohne weiteres Festziehen oder weitere Einstellung der Verbindung hält,
eine erste waagerechte Auflagefläche (66) auf dem Zwischenstück (62), die mit der zweiten waagerechten Auflagefläche (64) zusammenpaßbar ist,
wobei die beiden Auflageflächen die Drehung um die zweite senkrechte Achse ermöglichen, und
Mittel (80) (z.B. ein die Bauteile durchdringender Bolzen) zum Zusammenpressen der zylindrischen und waagerechten Flächen.

2. Tragarm nach Anspruch 1, bei dem die zweite Drehverbindung (56, 60) Mittel zum Drehen der Tastaturtragplatte (22) um eine waagerechte Drehachse zum Kippen der Tastatur in eine gewünschte Stellung aufweist.

3. Tragarm nach Anspruch 1, bei dem die Basis (20) ferner umfaßt:
ein oberes Klemmstück (44) mit einer Fläche, die gegen die Oberseite der Schreibtischplatte anpreßbar ist,
eine Gewindestange (48), auf welche das obere Bauteil aufgeschraubt ist, wobei die Gewindestange das Mittelteil senkrecht durchdringt,
einen mit der Gewindestange (48) verbundenen Einstellknopf (46) als Mittel zum Spannen oder Lösen des Klemmstücks und des Mittelteils in bezug auf die Schreibtischplatte.

4. Tragarm nach Anspruch 3, bei dem Einrichtungen (52, 54) zum Abstützen des Tragarms (18) gegenüber anderen Bauteilen der Basis (20) vorgesehen sind, so daß der Tragarm (18) um die erste senkrechte Achse auch dann gedreht werden kann, wenn die Basis (20) fest gegen die Schreibtischplatte geklemmt ist.

5. Tragarm nach Anspruch 4, bei dem die Gewindestange (48) und die erste senkrechte Achse gleichachsig sind.

6. Tragarm nach Anspruch 4, bei dem der Tragarm (18) und das Mittelteil (32) zusammenpaßbare zylindrische Drehlager (50, 54) aufweisen, der Einstellknopf (46) unter dem Arm (18) angeordnet ist, und die Gewindestange (48) das Innere des Drehlagers (50) vom Mittelteil (32) durchdringt.

7. Tragarm nach Anspruch 6, bei dem das Mittelteil (32) und der Tragarm (18) so gestaltet sind, daß sie das Drehlager (50) und die Gewindestange (48) verdecken.

8. Tragarm nach Anspruch 1, ferner mit einer Einrichtung (28) im Armteil (24) zum Verlegen des Kabels (26) der Tastatur (16) gegen Blicke verdeckt durch das Armteil (24) hindurch.

FIG 1

FIG 2

FIG 7

FIG 8

FIG 3

FIG 4

FIG 5

FIG 6

FIG 9

FIG 10

FIG 11

FIG 12

FIG 13

FIG 14

FIG. 15